# EUROPÄISCHE PATENTSCHRIFT

(11) **EP 1 110 447 B1**
(45) Veröffentlichungstag und Bekanntmachung des Hinweises auf die Patenterteilung: **02.03.2005**
(21) Anmeldenummer: 00127032.1
(22) Anmeldetag: 09.12.2000
(51) Int. Cl.: A01G 25/00

(54) **Bewässerungsmatte**
Irrigation sheet
Nappe d'irrigation

(30) Priorität: 23.12.1999 DE 29922637 U
(43) Veröffentlichungstag der Anmeldung: 27.06.2001
(73) Patentinhaber: Johns Manville Europe GmbH, 60323 Frankfurt am Main (DE)
(72) Erfinder: Kiener, Ralf, 97892 Kreuzwertheim (DE)
(74) Vertreter: Knoblauch, Andreas, Dr.-Ing.

(56) Entgegenhaltungen:
- US-A- 4 769 277

## Beschreibung

Die Erfindung bezieht sich auf eine Bewässerungsmatte mit einer Glasfasern aufweisenden Mittelschicht, einer Basisfolie aus Kunststoff, die an der Unterseite der Mittelschicht angeordnet ist, und einer Abdeckung auf der Oberseite der Mittelschicht.

Eine Bewässerungsmatte der eingangs genannten Art, die aus drei Lagen gebildet ist, ist aus DE 293 08 310 bekannt. Hierin weist die Bewässerungsmatte eine Basisfolie aus Kunststoff, eine Mittelschicht aus einem Glasfaservlies und eine Abdeckung aus einer Lochfolie aus Kunststoff auf.

In US 4 769 277 ist eine Bewässerungsmatte beschriebene, die auf der Unterseite eine wasserundurchlässige Schicht, als Mittelschicht einen Glasfaserfilz und als Abdeckung eine wasserundurchlässige Schicht, die an den Stellen, auf denen Pflanzbehälter aufgesetzt werden ausgespart ist, aufweist.

Ein Problem dieser Bewässerungsmatten ist, daß bei ihnen stets eine Wasserrückführungseinrichtung vorgesehen werden muß, um überschüssig aufgenommenes Wasser wieder abzugeben. Des weiteren bringen beide Abdeckungen Probleme bei einer Anwendung im Außenbereich mit sich. Bei beiden Abdeckungen ist mit einer Überwässerung bei starken Niederschlägen zu rechnen, da der Regen über eine Perforierung oder über Aussparungen, die nicht von Pflanzbehältern besetzt sind, nahezu unkontrolliert in die Mittelschicht eindringen kann. Außerdem weist die Bewässerungsmatte nach US 4 769 277 den weiteren Nachteil auf, daß die Pflanzbehälter nur an vordefinierten Stellen abgesetzt werden können.

Der Erfindung liegt die Aufgabe zugrunde, eine Bewässerungsmatte der eingangs beschriebenen Art anzugeben, die eine vereinfachte Wasserzuführung und Wasserabführung aufweist und die auch für die Anwendung in Außenbereichen geeignet ist.

Diese Aufgabe wird erfindungsgemäß dadurch gelöst, daß die Mittelschicht aus einem Glasmischgewebe besteht, das Glasfilamente in der Kette und Schußfäden aufweist, wobei die Schußfäden durch Glasstapelfaservorgarne und Polypropylen-Multifilamentgarne gebildet sind.

Die Matte weist also zumindest drei Bestandteile auf, nämlich die Mittelschicht, die Basisfolie und die Abdeckung. Die Mischung der Mittelschicht kombiniert eine gute Kapillarwirkung mit einem begrenzten Wasserrückhaltevermögen. Hierdurch weist das Glasmischgewebe eine Struktur auf, die bei allen normalerweise auftretenden äußeren Einflüssen nur soviel Flüssigkeit aus einer Versorgungseinrichtung entnimmt, wie es zu einer ausreichenden Befeuchtung einer zu versorgenden Fläche erforderlich ist. Des weiteren ermöglicht die gute Kapillarwirkung eine sehr einfache Wasserzuführung, indem die Mittelschicht beispielsweise längsseits in eine Versorgungseinrichtung wie z.B. eine Rinne eintaucht.

Es ist von Vorteil, daß das Glasmischgewebe Glasfilamente in der Kette mit einem Titer von 40 bis 112 tex und vorzugsweise 68 tex aufweist. Derartige Kettfäden wirken besonders gut mit den obengenannten Schußfäden zusammen.

Es ist günstig, daß die Schußfäden jeweils abwechselnd durch Glasstapelfaservorgarne und Polypropylen-Multifilamentgarne gebildet sind. Diese Anordnung der Schußfäden trägt zu einem für die Anordnung in Außenbereichen geeigneten Wasserrückhaltevermögen bei.

Es ist besonders vorteilhaft, daß die Glasstapelfasergarne einen Titer von 260 bis 1100 tex und vorzugsweise 660 tex aufweisen. Eine derartige Qualität der Glasstapelfaservorgarne sorgt für gute Eigenschaften der Mittelschicht bei Verwendung der Bewässerungsmatte im Außenbereich.

Des weiteren ist es besonders günstig, daß die Polypropylen-Multifilamentgarne einen Titer von 3000 bis 8000 dtex und vorzugsweise 5500 dtex aufweisen. Hierdurch wird zu einer guten Eignung der Mittelschicht für den vorgegebenen Anwendungsbereich der Bewässerungsmatte beigetragen.

Des weiteren ist von Vorteil, daß das Gewebe 1 bis 5 Gew.-% und vorzugsweise 2 Gew.-% wasserlösliche Stärke aufweist. Die wasserlösliche Stärke der Schußfäden bewirkt hierbei eine verbesserte Verarbeitung des Polypropylen-Glasgewebes.

Besonders bevorzugt ist es, daß die Abdeckung aus einem Polypropylen-Bändchengewebe gebildet ist. Durch ein derartiges Gewebe kann das Eindringen eines Niederschlages in die Mittelschicht zumindest weitgehend verhindert werden und trotzdem Feuchtigkeit in ausreichendem Maße von innen nach außen dringen.

In einer besonders vorteilhaften Ausgestaltung weist das Polypropylen-Bändchengewebe Bändchen mit einer Breite von 0,8 bis 4 mm und vorzugsweise 2 mm auf. Hierdurch weist die Abdeckung eine Struktur auf, die bei praktisch allen normalerweise auftretenden äußeren Einflüssen eine Überwässerung der Mittelschicht verhindert, da sie nur wenig Wasser durchläßt. Andererseits ist eine derartige Abdeckung ausreichend durchlässig um die auf der Bewässerungsmatte positionierten Pflanzen mit ausreichend Flüssigkeit aus dem Glasmischgewebe zu versorgen.

Des weiteren ist es günstig, daß die Basisfolie aus einer wasserundurchlässigen Polypropylen-Folie gebildet ist. Hierdurch kann Wasser, das von der Mittelschicht aufgenommen worden ist, länger in der Bewässerungsmatte gehalten werden.

Vorteilhafterweise weisen das Glasmischgewebe, die Basisfolie und das Polypropylen-Bändchengewebe untereinander eine lose Anordnung auf. Durch diese fehlende Verbindung der Lagen der Bewässerungsmatte erreicht man eine höhere Flexibilität, sowie eine einfachere Handhabung, insbesondere bei der Verlegung der Bewässerungsmatte auf großen Flächen im Außenbereich. Zusätzlich werden hierdurch Kosten eingespart.

Es ist weiterhin besonders günstig, daß das Glasmischgewebe, die Basisfolie und das Polypropylen-Bändchengewebe im eingebauten Zustand ein Gefälle zwischen 1 bis 10 % und vorzugsweise 5 % aufweisen. Durch dieses Gefälle kann nicht benötigte Bewässerungsflüssigkeit wieder aus der Matte austreten.

Die Erfindung wird im folgenden anhand eines bevorzugten Ausführungsbeispiels in Verbindung mit der Zeichnung näher beschrieben. Hierin zeigen:

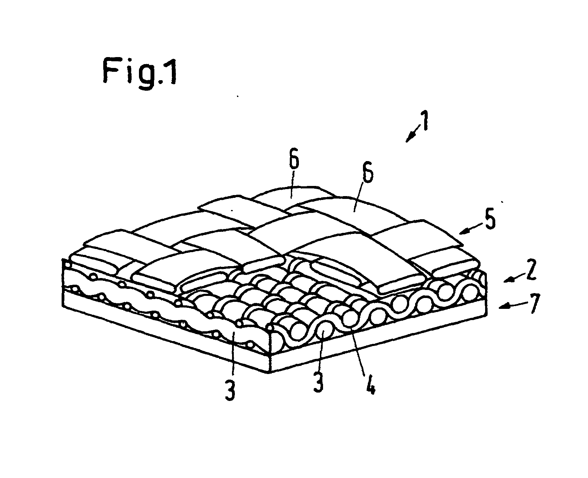

- Fig. 1: einen Schichtaufbau der erfindungsgemäßen Bewässerungsmatte und

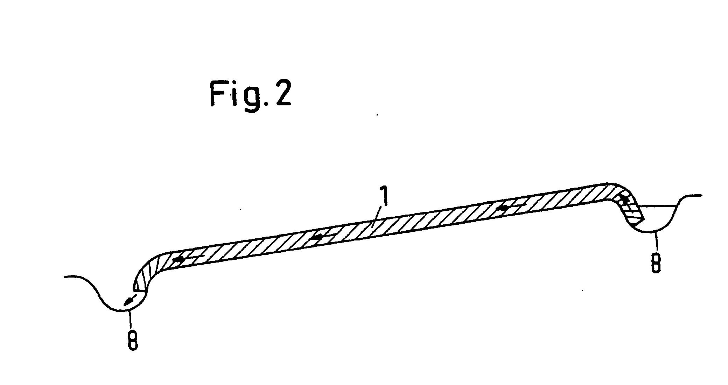

- Fig. 2: einen Querschnitt einer erfindungsgemäßen Bewässerungsmatte im eingebauten Zustand.

Eine Bewässerungsmatte 1 weist eine Mittelschicht aus einem Glasmischgewebe 2, eine Abdeckung aus einem Polypropylen-Bändchengewebe 5 und eine Basisfolie 7 auf. Das Glasmischgewebe 2 besteht aus Glasfilamenten 3 in der Kette und Schußfäden 4, die durch Glasstapelfaservorgarne und Polypropylen-Multifilamentgarne gebildet sind. Das Glasmischgewebe 2 besteht aus 68 tex Glasfilamenten in der Kette. Die Schußfäden 4 weisen für die Glasstapelfaservorgarne einen Titer von 660 tex und für die Polypropylen-Multifilamentgarne einen Titer von 5500 dtex auf. Dabei sind Glasstapelfaservorgarne und die Polypropylen-Multifilamentgarne jeweils abwechselnd angeordnet.

Durch die Verwendung dieses Glas-Polyproplyen-Gewebes ist es möglich, die gute Kapillarwirkung eines Glasgewebes mit einem begrenzten Wasserrückhaltevermögen zu kombinieren. Das Gewebe nimmt nur soviel Flüssigkeit auf, wie es zur ausreichenden Befeuchtung der Fläche erforderlich ist.

Sowohl die Glas- als auch die Polyproplyen-Schußfäden 4 weisen einen Anteil wasserlöslicher Stärke von 2 Gew.-% auf.

Die Oberseite der Bewässerungsmatte weist eine Abdekkung auf, die aus einem Polyproplyen-Bändchengewebe 5 gebildet ist. Die Bändchen 6 des Polyproplyen-Bändchengewebes 5 weisen eine Breite von 2 mm auf. Eine in dem Glasmischgewebe 2 enthaltene Bewässerungsflüssigkeit kann dieses Polyproplyen-Bändchengewebe 5 durchdringen und auf dem Gewebe befindliche Pflanzen befeuchten. Bei Niederschlag kann nur ein sehr geringer Teil des Regenwassers durch die Abdeckung in das Glasmischgewebe 2 eindringen. Der weitaus größte Teil des Regenwassers wird auf der Oberfläche der Bewässerungsmatte 1 abgeleitet. Hierdurch wird eine Überwässerung des Glasmischgewebes 2 verhindert.

Auf der Unterseite weist die Bewässerungsmatte 1 eine wasserundurchlässige Basisfolie 7 aus Polypropylen auf. Die Dicke der Basisfolie 7 ist so ausgewählt, daß eine Beschädigung der Bewässerungsmatte 1 in Folge mechanischer Beanspruchung durch den anstehenden Boden verhindert wird. Außerdem verhindert die Basisfolie 7 ein Abfließen der von dem Glasmischgewebe 2 aufgenommenen Bewässerungsflüssigkeit in den Boden.

Im eingebauten Zustand sind das Glasmischgewebe 2, die Basisfolie 7 und das Polyproplyen-Bändchengewebe 5 untereinander lose aufeinander verlegt. Des weiteren weist die eingebaute Bewässerungsmatte 1 ein Gefälle von 5 % in Querrichtung auf. Benachbarte Bahnen von Bewässerungsmatten weisen jeweils gegenläufige Quergefällerichtungen auf. Hierdurch entsteht im Querschnitt eine zickzackartige Flächenstruktur. Zwischen jeweils zwei Bahnen von Bewässerungsmatten 1 sind in Längsrichtung Rinnen 8 angeordnet. Hierbei dienen die oben liegenden Rinnen 8 der Zuführung der Bewässerungsflüssigkeit, die unteren Rinnen 8 nehmen überschüssige Bewässerungsflüssigkeit auf und leiten diese weiter ab.

## Patentansprüche

1. Bewässerungsmatte (1) mit einer Glasfasern aufweisenden Mittelschicht, einer Basisfolie (7) aus Kunststoff, die an der Unterseite der Mittelschicht angeordnet ist, und einer Abdeckung auf der Oberseite der Mittelschicht, **dadurch gekennzeichnet, daß** die Mittelschicht aus einem Glasmischgewebe (2) besteht, das Glasfilamente (3) in der Kette und Schußfäden (4) aufweist, wobei die Schußfäden (4) durch Glasstapelfaservorgarne und Polypropylen-Multifilamentgarne gebildet sind.

2. Bewässerungsmatte nach Anspruch 1, **dadurch gekennzeichnet, daß** das Glasmischgewebe (2) Glasfilamente (3) in der Kette mit einem Titer von 40 bis 112 tex und vorzugsweise 68 tex aufweist.

3. Bewässerungsmatte nach Anspruch 1 oder 2, **dadurch gekennzeichnet, daß** die Schußfäden (4) jeweils abwechselnd durch Glasstapelfaservorgarne und Polypropylen-Multifilamentgarne gebildet sind.

4. Bewässerungsmatte nach Anspruch 3, **dadurch gekennzeichnet, daß** die Glasstapelfaservorgarne einen Titer von 260 bis 1100 tex und vorzugsweise 660 tex aufweisen.

5. Bewässerungsmatte nach Anspruch 3 oder 4, **dadurch gekennzeichnet, daß** die Polypropylen-Multifilamentgarne einen Titer von 3000 bis 8000 dtex und vorzugsweise 5500 dtex aufweisen.

6. Bewässerungsmatte nach einem der Ansprüche 1 bis 5, **dadurch gekennzeichnet, daß** das Gewebe (2) 1 bis 5 Gew.-% und vorzugsweise 2 Gew.-% wasserlösliche Stärke aufweist.

7. Bewässerungsmatte nach einem der Ansprüche 1 bis 6, **dadurch gekennzeichnet, daß** die Abdeckung aus einem Polypropylen-Bändchengewebe (5) gebildet ist.

8. Bewässerungsmatte nach Anspruch 7, **dadurch gekennzeichnet, daß** das Polypropylen-Bändchengewebe (5) Bändchen (6) mit einer Breite von 0,8 bis 4 mm und vorzugsweise 2 mm aufweist.

9. Bewässerungsmatte nach einem der Ansprüche 1 bis 8, **dadurch gekennzeichnet, daß** die Basisfolie (7) aus einer wasserundurchlässigen Polypropylen-Folie gebildet ist.

10. Bewässerungsmatte nach einem der Ansprüche 1 bis 9, **dadurch gekennzeichnet, daß** das Glasmischgewebe (2), die Basisfolie (7) und das Polypropylen-Bändchengewebe (5) untereinander eine lose Anordnung aufweisen.

11. Bewässerungsmatte nach einem der Ansprüche 1 bis 10, **dadurch gekennzeichnet, daß** das Glasmischgewebe (2), die Basisfolie (7) und das Polypropylen-Bändchengewebe (5) im eingebauten Zustand ein Gefälle zwischen 1 bis 10 % und vorzugsweise 5 % aufweisen.

## Claims

1. Irrigation mat (1) comprising a midlayer comprising glass fibres, a plastic base film/sheet (7) disposed on the underside of the midlayer, and a covering on the upper side of the midlayer, **characterized in that** the midlayer consists of a union glass cloth (2) which comprises glass filaments (3) in the warp and weft threads (4), the weft threads (4) being formed by glass staple fibre rovings and polypropylene multifilament yarns.

2. Irrigation mat according to Claim 1, **characterized in that** the union glass cloth (2) comprises glass filaments (3) in the warp which have a linear density of 40 to 112 tex and preferably 68 tex.

3. Irrigation mat according to Claim 1 or 2,
**characterized in that** the weft threads (4) are formed by alternating glass staple fibre rovings and polypropylene multifilament yarns.

4. Irrigation mat according to Claim 3, **characterized in that** the glass staple fibre rovings have a linear density of 260 to 1100 tex and preferably 660 tex.

5. Irrigation mat according to Claim 3 or 4, **characterized in that** the polypropylene multifilament yarns have a linear density of 3000 to 8000 dtex and preferably 5500 dtex.

6. Irrigation mat according to any one of Claims 1 to 5, **characterized in that** the cloth (2) comprises 1% to 5% by weight and preferably 2% by weight of water-soluble starch.

7. Irrigation mat according to any one of Claims 1 to 6, **characterized in that** the covering is formed of a woven polypropylene tape fabric (5).

8. Irrigation mat according to Claim 7, **characterized in that** the woven polypropylene tape fabric (5) comprises tapes (6) having a width of 0.8 to 4 mm and preferably 2 mm.

9. Irrigation mat according to any one of Claims 1 to 8, **characterized in that** the base film/sheet (7) is formed of a water-impervious polypropylene film/sheet.

10. Irrigation mat according to any one of Claims 1 to 9, **characterized in that** the union glass cloth (2), the base film/sheet (7) and the woven polypropylene tape fabric (5) have a loose arrangement between each other.

11. Irrigation mat according to any one of Claims 1 to 10, **characterized in that** the union glass cloth (2), the base film/sheet (7) and the woven polypropylene tape fabric (5) have a gradient between 1% to 10% and preferably 5% in the installed state.

## Revendications

1. Nappe d'irrigation (1) avec une couche centrale présentant des fibres de verre, une feuille de base (7) en matière plastique, qui est disposée sur la face inférieure de la couche centrale, et un recouvrement sur la face supérieure de la couche centrale, **caractérisée en ce que** la couche centrale se compose d'un tissu mixte de verre (2) qui présente des filaments de verre (3) dans la chaîne et des fils de trame (4), dans laquelle les fils de trame (4) sont formés par des mèches de fibres discontinues en verre et des fils à filaments multiples en polypropylène.

2. Nappe d'irrigation selon la revendication 1, **caractérisée en ce que** le tissu mixte en verre (2) comprend des filaments en verre (3) dans la chaîne avec un titre de 40 à 112 tex et de préférence de 68 tex.

3. Nappe d'irrigation selon la revendication 1 ou 2, **caractérisée en ce que** les fils de trame (4) sont formés chaque fois en alternance par des mèches de fibres discontinues en verre et des fils à filaments multiples en polypropylène.

4. Nappe d'irrigation selon la revendication 3, **caractérisée en ce que** les mèches de fibres discontinues en verre présentent un titre de 260 à 1100 tex et de préférence de 660 tex.

5. Nappe d'irrigation selon la revendication 3 ou 4, **caractérisée en ce que** les fils à filaments multiples en polypropylène présentent un titre de 3000 à 8000 dtex et de préférence de 5500 dtex.

6. Nappe d'irrigation selon l'une quelconque des revendications 1 à 5, **caractérisée en ce que** le tissu (2) présente 1 à 5% en poids et de préférence 2% en poids d'empois hydrosoluble.

7. Nappe d'irrigation selon l'une quelconque des revendications 1 à 6, **caractérisée en ce que** le recouvrement est formé d'un tissu de bandelettes de polypropylène (5).

8. Nappe d'irrigation selon la revendication 7, **caractérisée en ce que** le tissu de bandelettes de polypropylène (5) présente des bandelettes (6) d'une largeur de 0,8 à 4 mm et de préférence de 2 mm.

9. Nappe d'irrigation selon l'une quelconque des revendications 1 à 8, **caractérisée en ce que** la feuille de base (7) est formée d'une feuille de polypropylène imperméable à l'eau.

10. Nappe d'irrigation selon l'une quelconque des revendications 1 à 9, **caractérisée en ce que** le tissu mixte de verre (2), la feuille de base (7) et le tissu de bandelettes de polypropylène (5) présentent une disposition libre les uns par rapport aux autres.

11. Nappe d'irrigation selon l'une quelconque des revendications 1 à 10, **caractérisée en ce que** le tissu mixte de verre (2), la feuille de base (7) et le tissu de bandelettes de polypropylène (5) présentent à l'état assemblé une pente comprise entre 1% et 10% et de préférence de 5%.
